# EUROPÄISCHE PATENTSCHRIFT

(11) **EP 0 548 021 B1**
(45) Veröffentlichungstag und Bekanntmachung des Hinweises auf die Patenterteilung: **24.01.1996**
(21) Anmeldenummer: 92810982.6
(22) Anmeldetag: 10.12.1992
(51) Int. Cl.: B29C 45/74, B29C 47/82

(54) **Kühlvorrichtung**
Cooling apparatus
Installation de refroidissement

(30) Priorität: 14.12.1991 DE 4141329
(43) Veröffentlichungstag der Anmeldung: 23.06.1993
(73) Patentinhaber: BUSS AG, CH-4052 Basel (CH)
(72) Erfinder: Ganz, Martin, CH-8050 Zürich (CH)
(74) Vertreter: Rottmann, Maximilian R.

(56) Entgegenhaltungen:
- DE-A- 2 756 752
- DE-A- 3 017 559
- DE-A- 3 343 822
- US-A- 3 730 262

## Beschreibung

Die vorliegende Erfindung bezieht sich auf eine Kühlvorrichtung nach dem Oberbegriff des Patentanspruchs 1.

Solche Kühlvorrichtungen werden beispielsweise in der Verfahrenstechnik, in Extrudern oder sogenannten "Ko-Knetern" zum Kühlen des Gehäuses und damit des zu verarbeitenden Materials eingesetzt. Während des Arbeitsvorganges ist meistens Bedingung, dass eine vorbestimmte Grenztemperatur des Gehäuses und damit des darin verarbeiteten Materials eingehalten wird. Die präzise Einhaltung dieser Grenztemperatur ist insbesondere dann mit grossem Aufwand und erheblichen Schwierigkeiten verbunden, wenn das zu kühlende Material eine Temperatur von 350°C - 500°C oder noch mehr aufweist. In diesem Fall kann nicht mehr, wie bei tieferen Temperaturen, mit Öl, das in Kühlbohrungen zirkulieren sollte, gearbeitet werden, da Öle im Dauerbetrieb und ohne besondere Vorkehrungen wirtschaftlich nur bis etwa 350°C einsetzbar sind.

Wünschenswert wäre daher, ein Kühlmedium einzusetzen, welches wirtschaftlich, d.h. kostengünstig beschafft und eingesetzt werden kann. Ein solches Medium ist z.B. Wasser. Wasser als Kühlmedium hat jedoch den grundlegenden Nachteil, dass es bei Temperaturen von über 100°C verdampft, sofern es nicht unter Druck steht. Da die zu kühlenden Vorrichtungen aber Temperaturen aufweisen, die durchaus im Bereich von 300°C - 400°C liegen, müsste das Wasser (um im flüssigen Aggregatszustand zu bleiben) unter einem so hohen Druck stehen, dass es nicht mehr wirtschaftlich einsetzbar ist.

Bei den bis heute bekannten Anordnungen mit Kühlleitungen resp. Kühlbohrungen, welche in die zu kühlenden Vorrichtungen eingearbeitet sind und bei welchen das Kühlmedium daher mit seiner ganzen Oberfläche mit dem zu kühlenden Gegenstand in direkter thermischer Verbindung steht, ist der Einsatz von Wasser als Kühlmedium aus obigen Überlegungen deshalb problematisch.

Aus der US-A- 3 730 262 ist demgegenüber eine Kühlvorrichtung bekannt, bei der ein gebogenes, Kühlwasser führendes Kühlrohr mittels eines flexiblen Metallbandes am äusseren Umfang eines zu kühlenden zylindrisches Gehäuses gehalten ist, so dass das Kühlrohr in direktem Kontakt mit der Umfangsfläche des Gehäuses auf diese gepresst wird. Das Kühlrohr hat beispielsweise einen dreieckförmigen Querschnitt, um einen möglichst grossflächigen Kontakt mit der Gehäuseoberfläche zu erreichen. Das Gehäuse weist keinen Kühlkanal zur Aufnahme des Kühlrohres auf. Es ist vielmehr vorgesehen, mehrere derartige Kühlvorrichtungen an wählbaren Stellen längs des Gehäuses anzuordnen. Die beschriebene Kühlvorrichtung ist daher für eine gleichmässige Kühlung dickwandiger Gehäuse und für eine Anwendung bei hohen Gehäusetemperaturen nicht geeignet.

Es sind auch Kühlvorrichtungen bekannt, siehe DE-A-2 756 752 oder DE-C-3 343 822, bei denen ein Kühlrohr in einem einzigen ringförmigen Kanal gewickelt angeordnet ist. Der Kanal dieser Vorrichtungen weist ferner noch Heizdrahtwendeln auf. Die Problematik der Wärmeübertragung zwischen Gehäuse und Kühlmedium wird in diesem Stand der Technik nicht angesprochen.

Aufgabe der Erfindung ist es daher, eine Anordnung vorzuschlagen, bei welcher ein Kühlmedium, z.B. Wasser, für ein mit hohen Temperaturen beaufschlagtes Gehäuse eingesetzt werden kann, ohne dass dabei das Kühlmedium unter hohem Druck steht und ohne dass dabei die vorgängig geschilderten Nachteile, insbesondere die ungleichmassige Abkühlung des zu kühlenden Gegenstandes, bei genügender Kühlleistung, zum Tragen kommen.

Diese Aufgabe wird durch eine Kühlvorrichtung gelöst, welche die im kennzeichnenden Teil des Patentanspruchs 1 beschriebenen Merkmale aufweist. Weitere alternative Merkmale der Erfindung und besondere Ausführungsformen sind in den abhängigen Ansprüchen 2 bis 13 beschrieben.

Mit der erfindungsgemässen Ausführung muss das Kühlmedium zwar länger im zu kühlenden Gegenstand zirkulieren, um die gleiche Kühlleistung zu erzielen wie mit Kühlvorrichtungen, bei denen das Kühlmedium mit seiner ganzen Oberfläche mit dem zu kühlenden Körper in direkter thermischer Verbindung steht. Andererseits wird aber der Vorteil erreicht, dass eine gleichmässige Temperierung des Gehäuses erfolgt und dass ein in jeder Beziehung unbedenkliches und auch kostengünstiges Kühlmittel eingesetzt werden kann, z.B. Wasser, ohne dass es unter hohem Druck gehalten werden muss.

Ausführungsbeispiele der Erfindung werden im folgenden anhand der beiliegenden Zeichnungen erläutert. Es zeigen:
- Fig.1: einen Querschnitt durch eine bekannte Kühlanordnung in schematischer Darstellung;
- Fig.2: einen Teil-Querschnitt durch eine vorgeschlagene Kühlvorrichtung, in welcher eine erste Ausführungsform eines einzelnen Kühlkanals sichtbar ist;
- Fig.2a: einen Längsschnitt zu Fig.2;
- Fig.2b: eine Variante zu Fig. 2a;
- Fig.3: einen Teil-Querschnitt durch die vorgeschlagene Kühlvorrichtung, in welcher eine zweite Ausführungsform eines einzelnen Kühlkanales sichtbar ist;
- Fig.3a: einen Längsschnitt zu Fig.3;
- Fig.4: einen Teil-Querschnitt durch die vorgeschlagene Kühlvorrichtung, in welcher eine dritte Ausführungsform eines einzelnen Kühlkanales sichtbar ist;
- Fig.5: einen Teil-Querschnitt durch die vorgeschlagene Kühlvorrichtung, in welcher eine vierte Ausführungsform eines einzelnen Kühlkanales sichtbar ist; und
- Fig.5a: einen Längsschnitt zu Fig.5.

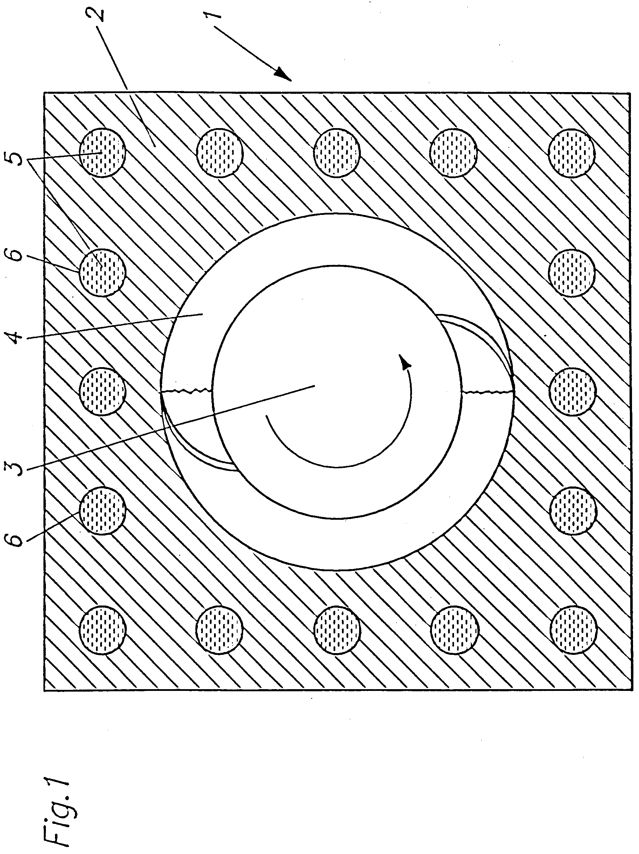

Eine bekannte Kühlanordnung ist in der Fig.1 generell mit 1 bezeichnet. Sie besitzt ein Gehäuse 2, das mit Kühlkanälen 6 versehen ist. Diese sind als Bohrungen direkt in das Gehäuse 2 eingearbeitet. Das Gehäuse 2 umschliesst einen Arbeitsraum 4, in welchem ein rotierendes und/oder oszillierendes Arbeitsorgan 3, z.B. eine Kneterwelle, angeordet ist. Das Kühlmedium 5 zirkuliert direkt im Kühlkanal 6 und steht somit mit seiner ganzen Oberfläche mit dem zu kühlenden Gehäuse 2 in direkter, thermischer Verbindung. Dies führt zu den eingangs erwähnten Nachteilen. Wird das Kühlmedium nur impulsweise eingespritzt, so verdampft es örtlich, was wiederum eine ungleichmässige Wärmeabfuhr bewirkt.

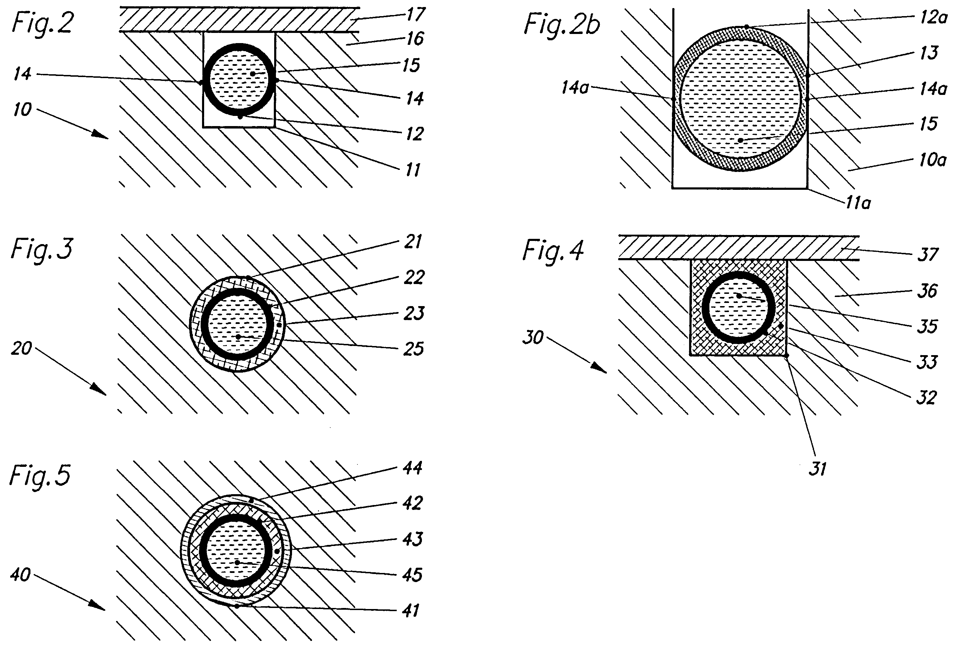

Ein erstes Beispiel einer erfindungsgemässen Lösung geht aus den Fig. 2, 2a und 2b hervor. Die schematisch gezeichnete Kühlvorrichtung besteht aus einem nur teilweise dargestellten Gehäuse 10, welches einen Gehäusekörper 16 und einen Gehäusedeckel 17 aufweist. Im Gehäusekörper 16 sind nutenförmige Kühlkanäle 11 mit rechteckigem Querschnitt vorhanden, die zur Aufnahme von Hohlkörpern 12 bzw. 12a dienen, in welchen ein Kühlmedium 15 zirkuliert. Die Hohlkörper 12 bzw. 12a bestehen vorzugsweise aus Metall und haben im dargestellten Beispiel runden Querschnitt. Es ist aber auch möglich, Hohlkörper mit ovalem oder polygonalem Querschnitt zu verwenden.

Gemäss Fig.2 ist der Aussendurchmesser des durch eine Rohrleitung 12 gebildeten Hohlkörpers so bemessen, dass dieser die beiden gegenüberliegenden Wände des Kühlkanales 11 berührt. Daraus ergeben sich schmale Kontaktflächen 14 zur Wärmeübertragung. Ist eine intensivere Wärmeübertragung erwünscht, so wird gemäss Fig. 2b eine Rohrleitung 12a verwendet, welche beiderseits Abflachungen 13 besitzt, aus welchen sich grössere Kontaktflächen 14a ergeben.

Die Fig. 3 und 3a zeigen ein zweites Ausführungsbeispiel einer Kühlvorrichtung, bestehend aus einem Gehäuse 20 mit einem Kühlkanal 21, der in diesem Ausführungsbeispiel als Bohrung ausgebildet ist. Im Kühlkanal 21 findet ein Hohlkörper 22 mit dem darin zirkulierenden Kühlmedium 25 Aufnahme. Zwischen dem Kühlkanal 21 und dem Hohlkörper 22 ist eine Zwischenschicht 23 in Form einer Ummantelung der Rohrleitung 22 vorhanden. Durch die Dicke a der Zwischenschicht 23 kann die thermische Kopplung und dadurch die Wärmeübertragung zwischen der Rohrleitung 22 und dem Kühlkanal 21 resp. zwischen dem Kühlmedium 25 und dem zu kühlenden Gehäuse 20 und damit den zu kühlenden Materialien beeinflusst werden. Durch das für die Zwischenschicht 23 verwendete Material (gute bis verminderte thermische Leitfähigkeit) kann die thermische Kopplung zwischen dem Hohlkörper 22 und dem Kühlkanal 21, resp. zwischen dem Kühlmedium 25 und dem zu kühlenden Gehäuse 20 und damit den zu kühlenden Materialien ebenfalls beeinflusst werden. Als Material für die Zwischenschicht 23 kommt z.B. Quarzsand oder eine Mischung zwischen Quarzsand und einem anderen Material mit anderer thermischer Leitfähigkeit in Frage.

Gemäss Fig. 4 ist eine Kühlvorrichtung mit einem Gehäuse 30 sowie einem Kühlkanal 31 vorgesehen, der in diesem Ausführungsbeispiel, wie bei Fig.2, als Nut ausgebildet ist. Im Kühlkanal 31 ist ein Hohlkörper 32 untergebracht, in welchem das Kühlmedium 35 zirkuliert. Zur Isolation dient eine Zwischenschicht 33, welche den Raum zwischen dem Hohlkörper 32 und dem als Nut ausgebildeten Kühlkanal 31 ausfüllt. Auch in diesem Fall kann durch das für die Zwischenschicht 33 verwendete Material (gute bis verminderte thermische Leitfähigkeit) die thermische Kopplung zwischen dem Hohlkörper 32 und dem als Nut ausgebildeten Kühlkanal 31, resp. zwischen dem Kühlmedium 35 und dem zu kühlenden Gehäuse 30 und damit den zu kühlenden Materialien, beeinflusst werden. Durch die Dicke der Zwischenschicht 33 kann die thermische Kopplung zwischen dem Hohlkörper 32 und dem als Nut ausgebildeten Kühlkanal 31 resp. zwischen dem Kühlmedium 35 und dem zu kühlenden Gehäuse 30 und damit den zu kühlenden Materialien wiederum beeinflusst werden.

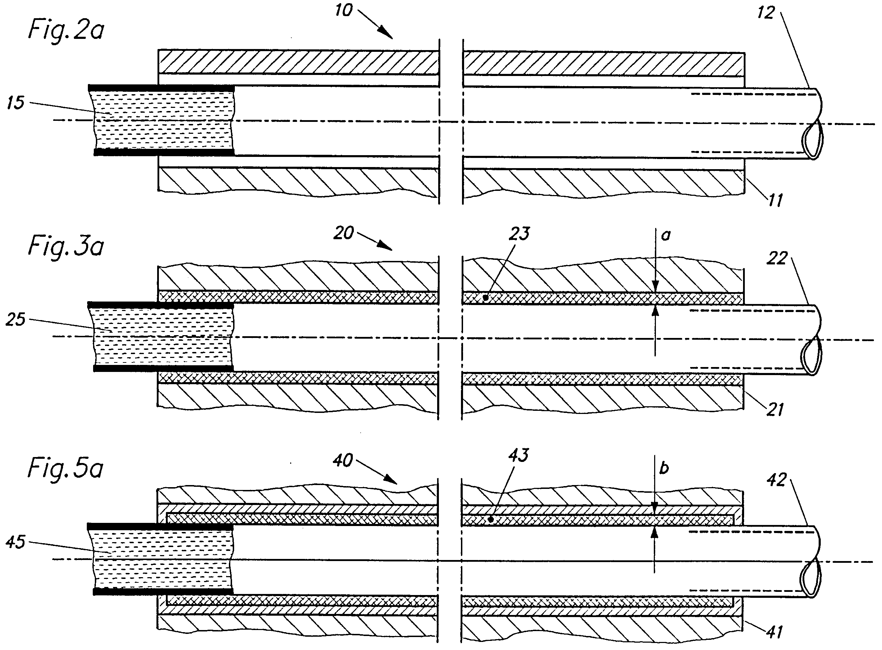

Fig. 5 und 5a zeigen eine weitere Variante einer Kühlvorrichtung, bei welcher ein Hohlkörper 42 mit Zwischenschicht 43 in einer Patrone 44 untergebracht ist, welche ihrerseits im Gehäuse 40 Aufnahme findet. Auch für dieses Ausführungsbeispiel gilt, dass die Dicke b der Zwischenschicht 43 die thermische Kopplung zwischen dem Hohlkörper 42 und dem in Form einer Patrone 41 eingelassenen Kühlkanal resp. zwischen dem Kühlmedium 45 und dem zu kühlenden Gehäuse 40 beeinflusst.

Im Gegensatz zu den bekannten Kühlvorrichtungen sind bei den erfindungsgemässen Ausführungsbeispielen in den Kühlkanälen 11, 21, 31, 41 jeweils ein Hohlkörper 12, 22, 32, 42 zur Aufnahme des Kühlmediums 15, 25, 35, 45 vorhanden.

Die beschriebenen Ausführungen haben neben den bereits beschriebenen Eigenschaften noch einige weitere wesentliche Vorteile aufzuweisen. Diverse Versuche in der Praxis haben gezeigt, dass mit den vorgeschlagenen Ausführungen selbst Vorrichtungen, die eine Temperatur von mehr als 400°C aufweisen, mit Wasser als Kühlmedium wirkungsvoll gekühlt werden können und dass dabei der benötigte Druck, um das Kühlmedium Wasser in flüssigem Aggregatszustand zu halten, nur wenige Bar beträgt.

## Patentansprüche

1. Kühlvorrichtung, welche ein Gehäuse (2, 10, 10a) und einen von diesem Gehäuse umschlossenen Arbeitsraum (4) zur Verarbeitung von Materialien mit mindestens einem sich drehenden und /oder oszillierenden Arbeitsorgan (3) umfasst, wobei die Kühlung mittels eines durch Kühlkanäle (6, 11, 11a) zirkulierenden Mediums (5, 15) erfolgt, welche Kühlkanäle im Gehäuse (2, 10, 10a) eingearbeitet sind, dadurch gekennzeichnet, dass in den Kühlkanälen (11, 11a) angeordnete Hohlkörper (12, 12a) vorhanden sind, in welchen das Kühlmedium (15) zirkuliert und welche höchstens mit einem Teil ihrer Oberfläche mit den Begrenzungswänden der Kühlkanäle (6, 11, 11a) in direkter thermischer Verbindung stehen.

2. Kühlvorrichtung nach Anspruch 1, dadurch gekennzeichnet, dass die in den Kühlkanälen (21, 31, 41) eingesetzten Hohlkörper (22, 32, 42) nur mittelbar über eine Zwischenschicht (23, 33, 43) mit den Begrenzungswänden der Kühlkanäle (21, 31, 41) und damit mit dem Gehäuse (20, 30, 40) in thermischer Verbindung stehen.

3. Kühlvorrichtung nach Anspruch 1, dadurch gekennzeichnet, dass die Hohlkörper (12, 12a) thermisch nur über sich längs deren Oberfläche erstreckende Kontaktflächen (14, 14a) mit dem Gehäuse (10, 10a) verbunden sind.

4. Kühlvorrichtung nach den Ansprüchen 2 oder 3, dadurch gekennzeichnet, dass die Kühlkanäle (11, 11a) die Form von Nuten aufweisen.

5. Kühlvorrichtung nach einem der Ansprüche 2 - 4, dadurch gekennzeichnet, dass die Kühlkanäle (11, 11a) rechteckigen Querschnitt aufweisen.

6. Kühlvorrichtung nach einem der vorhergehenden Ansprüche, dadurch gekennzeichnet, dass die Hohlkörper (12, 12a) aus Metall bestehen.

7. Kühlvorrichtung nach einem der vorhergehenden Ansprüche, dadurch gekennzeichnet, dass die Hohlkörper (12, 12a) einen runden, ovalen oder polygonalen Querschnitt aufweisen.

8. Kühlvorrichtung nach einem der vorhergehenden Ansprüche, dadurch gekennzeichnet, dass zur Vergrösserung der Kontaktflächen (14a) zwischen dem Hohlkörper (12a) und dem Kühlkanal (11a) des Gehäuses (10a) am Umfang des Hohlkörpers (12a) Abflachungen (13) vorhanden sind (Fig.2b).

9. Kühlvorrichtung nach Anspruch 2, dadurch gekennzeichnet, dass die Zwischenschicht (23, 33, 43) als Ummantelung des Hohlkörpers (22, 32, 42) ausgebildet ist.

10. Kühlvorrichtung nach Anspruch 2 oder 9, dadurch gekennzeichnet, dass die Zwischenschicht (23, 33, 43) aus Materialien mit niedriger thermischer Leitfähigkeit besteht.

11. Kühlvorrichtung nach Anspruch 2 oder 9, dadurch gekennzeichnet, dass die Zwischenschicht (23, 33, 43) aus verschiedenen Materialien mit verschiedenen thermischen Leitfähigkeiten zusammengesetzt ist.

12. Kühlvorrichtung nach Anspruch 10, dadurch gekennzeichnet, dass die Zwischenschicht (23, 33, 43) aus Quarzsand besteht.

13. Kühlvorrichtung nach einem der Ansprüche 2 und 9-12, dadurch gekennzeichnet, dass der Hohlkörper (42) samt Zwischenschicht (43) in einer Patrone (44) angeordnet ist.

## Claims

1. Cooling device, which comprises a casing (2, 10, 10a) and a working chamber (4) enclosed by this casing for the processing of materials, having at least one rotating and/or oscillating working unit (3), the cooling taking place by means of a medium (5, 15) circulating through cooling ducts (6, 11, 11a) said cooling ducts being incorporated in the casing (2, 10, 10a), characterized in that arranged hollow parts (12, 12a) are present in the cooling ducts (11, 11a), in which the coolant medium (15) circulates and which are in direct thermal connection with not more than one part of their surface with the limiting balls of the cooling ducts (6, 11, 11a).

2. Cooling device according to Claim 1, characterized in that the hollow parts (22, 32, 42) inserted in the cooling ducts (21, 31, 41) are in thermal connection only indirectly via an intermediate layer (23, 33, 43) with the limiting walls of the cooling ducts (21, 31, 41) and thus with the casing (20, 30, 40).

3. Cooling device according to Claim 1, characterized in that the hollow parts (12, 12a) are thermally connected to the casing (10, 10a) only via contact surfaces (14, 14a) extending along their surfaces.

4. Cooling device according to Claim 2 or 3, characterized in that the cooling ducts (11, 11a) have the shape of grooves.

5. Cooling device according to one of Claims 2 - 4, characterized in that the cooling ducts (11, 11a) have rectangular cross-sections.

6. Cooling device according to one of the preceding claims, characterized in that the hollow parts (12, 12a) are made of metal.

7. Cooling device according to one of the preceding claims, characterized in that the hollow parts (12, 12a) have round, oval or polygonal cross-sections.

8. Cooling device according to one of the preceding claims, characterized in that, in order to increase the contact surfaces (14a) between the hollow part (12a) and the cooling duct (11a) of the casing (10a), flattenings (13) (Fig. are present at the periphery of the hollow part (12a).

9. Cooling device according to Claim 2, characterized in that the intermediate layer (23, 33, 43) is constructed as a sheathing of the hollow part (22, 32, 42).

10. Cooling device according to Claim 2 or 9, characterized in that the intermediate layer (23, 33, 43) is made of materials with low thermal conductivity.

11. Cooling device according to Claim 2 or 9, characterized in that the intermediate layer (23, 33, 43) is made up of various materials with various thermal conductivities.

12. Cooling device according to Claim 10, characterized in that the intermediate layer (23, 33, 43) consists of quartz sand.

13. Cooling device according to one of Claims 2 and 9-12, characterized in that the hollow part (42) is located together with the intermediate layer (43) in a cartridge (44).

## Revendications

1. Installation de refroidissement, qui comprend un boîtier (2, 10, 10a) et un espace de travail (4) entouré par ce boîtier pour le traitement de matériaux avec au moins un organe de travail (3) tournant et/ou oscillant, le refroidissement s'effectuant au moyen d'un agent (5, 15) circulant dans des canaux de refroidissement (6, 11, 11a), canaux qui sont incorporés dans le boîtier (2, 10, 10a), caractérisée en ce qu'il y a des corps creux (12, 12a) disposés dans les canaux de refroidissement (11, 11a) dans lesquels circule l'agent de refroidissement (15) et qui, au maximum avec une partie de leur surface, sont en liaison thermique directe avec les parois de limitation des canaux de refroidissement (6, 11, 11a).

2. Installation de refroidissement selon la revendication 1, caractérisée en ce que les corps creux (22, 32, 42) insérés dans les canaux de refroidissement (21, 31, 41) ne sont en liaison thermique qu'indirectement via une couche intermédiaire (23, 33, 43) avec les parois de limitation des canaux de refroidissement (21, 31, 41) et donc avec le boîtier (20, 30, 40).

3. Installation de refroidissement selon la revendication 1, caractérisée en ce que les corps creux (12, 12a) ne sont reliés thermiquement au boîtier (10, 10a) que par des surfaces de contact (14, 14a) s'étendant le long de leur surface.

4. Installation de refroidissement selon l'une quelconque des revendications 2 ou 3, caractérisée en ce que les canaux de refroidissement (11, 11a) ont la forme de rainures.

5. Installation de refroidissement selon l' une quelconque des revendications 2 à 4, caractérisée en ce que les canaux de refroidissement (11, 11a) ont une section rectangulaire.

6. Installation de refroidissement selon l'une quelconque des revendications précédentes, caractérisée en ce que les corps creux (12, 12a) sont en métal.

7. Installation de refroidissement selon l'une quelconque des revendications précédentes, caractérisée en ce que les corps creux (12, 12a) présentent une section ronde, ovale ou polygonale.

8. Installation de refroidissement selon l'une quelconque des revendications précédentes, caractérisée en ce que, pour agrandir les surfaces de contact (14a) entre le corps creux (12a) et le canal de refroidissement (11a) du boîtier (10a), il existe des parties aplaties (13) à la périphérie du corps creux (12a).

9. Installation de refroidissement selon la revendication 2, caractérisée en ce que la couche intermédiaire (23, 33, 43) est conformée comme enveloppe du corps creux (22, 32, 42).

10. Installation de refroidissement selon l'une quelconque des revendications 2 ou 9, caractérisée en ce que la couche intermédiaire (23, 33, 43) est à base de matériaux avec une faible conductibilité thermique.

11. Installation de refroidissement selon l'une quelconque des revendications 2 ou 9, caractérisée en ce que la couche intermédiaire (23, 33, 43) est composée de différents matériaux avec différentes conductibilités thermiques.

12. Installation de refroidissement selon la revendication 10, caractérisée en ce que la couche intermédiaire (23, 33, 43) est à base de sable silicieux.

13. Installation de refroidissement selon l'une quelconque des revendications 2 et 9 à 12, caractérisée en ce que le corps creux (42) avec la couche intermédiaire (43) est disposé dans une cartouche (44).
